# EUROPEAN PATENT APPLICATION

(11) **EP 4 471 093 A1**
(43) Date of publication of application: **04.12.2024**
(21) Application number: 23176062.0
(22) Date of filing: 30.05.2023
(51) Int. Cl.: C08L 97/00

(54) **ULTRASOUND-ASSISTED PROCESS FOR THE PRODUCTION OF LIGNIN NANOPARTICLES**

(71) Applicant: Creative Nano P.C., 144 51 Metamorfosi, Athens (GR)
(72) Inventor: Makri, Sofia Paraskevi, 17673 Kallithea, Athens (GR); Grigoropoulos, Alexios, 18345 Moschato, Athens (GR); Bikiaris, Dimitrios, 55534 Thessaloniki (GR); Deligkiozi, Ioanna, 11147 Galatsi, Athens (GR); Zoikis-Karathanasis, Alexandros, 11147 Galatsi, Athens (GR)
(74) Representative: Dodou, Evdokia

(57) **Abstract**

Method for manufacturing colloidal dispersions of lignin nanoparticles (LNPs) comprising the steps of dispersing raw lignin in aqueous medium such as water, applying ultrasonication (U/S) treatment, during which the temperature is kept constant at a set value of at least 20°C. The method is environmentally benign as it employs an aqueous medium for dispersing the lignin without organic solvents, acids or bases thus eliminating the use of potentially hazardous chemicals or organic solvents. The resulting LNPs are optionally freeze-dried to obtain LNPs of controlled size in solid-state powder form. Also provided is a method of producing LNPs at a pilot-line scale from raw lignin using a customized ultrasound-assisted pilot line. The present invention can produce LNPs with a particle size of 200 nm or less in solid-state form as measured by Transmission Electron Microscopy and a hydrodynamic diameter of 700 nm or less when dispersed in aqueous medium and measured by Dynamic Light Scattering.

## Description

### TECHNICAL FIELD

The present invention relates to a method for the production of lignin nanoparticles (LNPs) with controlled particle size, either in the solid-state or dispersed in a liquid medium, from commercially available hardwood/softwood/non-wood lignin. It also relates to lignin nanoparticles obtainable by the said process through a customized ultrasound-assisted pilot-line.

### BACKGROUND OF THE INVENTION

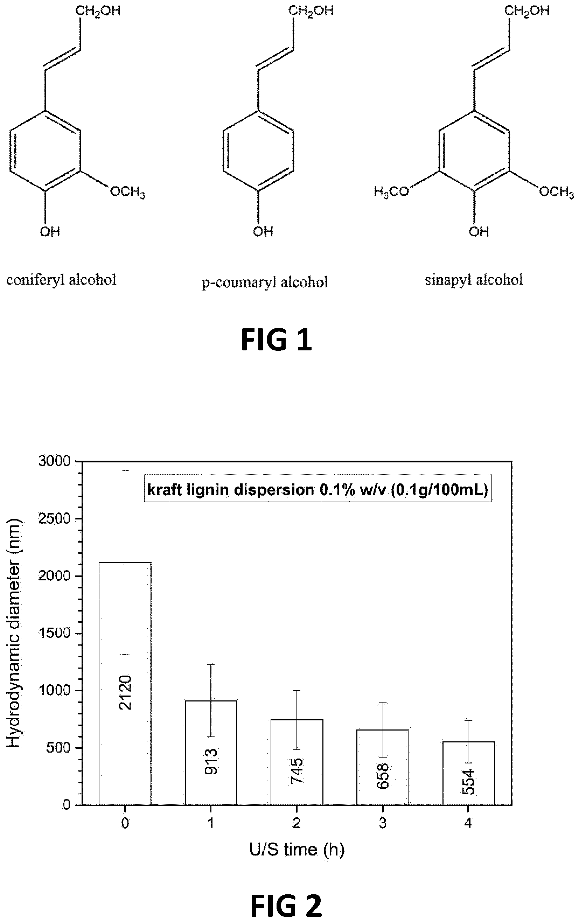

Lignin is the second most abundant biopolymer after cellulose that can be isolated from lignocellulosic biomass. Lignin is a key component of the supporting tissue of most plants (e.g., wood and bark), providing structural support and anti-microbial defense. It has a highly complex and heterogeneous structure comprising an aromatic backbone formed by the cross-linking of mainly three different p-(hydroxypropenyl) phenols, termed lignols (Fig. 1), whose relative ratio varies depending on the lignin's origin (softwood, hardwood, non-wood) and dictates its overall physicochemical properties (Hussin, M. H. et al. Int J Biol Macromol 2022, 200, 303-326). The latter are also affected by the pre-treatment method (Sulfite, Kraft, Organosolv, Soda or enzymatic hydrolysis process) employed for the isolation of lignin from lignocellulosic biomass (Zhang, Z. et al. Nanomaterials 2021, 11(5), 1336; Puglia D., Santulli C., Sarasini F., Micro and Nanolignin in Aqueous Dispersions and Polymers, Elsevier, 2021).

Importantly, lignin is non-toxic and biodegradable, it is hydrophobic and its phenolic backbone can block UV light. Moreover, it shows promising antioxidant and antibacterial activity as well as flame retardancy. Therefore, the integration of lignin into polymeric materials may pave the way for important applications. In addition, chemical modifications of the functionalities on the surface (e.g., methoxy, hydroxyl and carbonyl groups) can further enhance the compatibility with and the desired properties of the polymeric matrix.

However, raw lignin tends to form large aggregates with a particle size greater than two microns (µm) and a heterogeneous particle size distribution which in turn lead to composite materials with a non-uniform dispersion of lignin particles in the polymeric matrix. By contrast, lignin with a particle size in the nanoscale presents superior physicochemical properties as well as better compatibility. There are many studies that demonstrate the added value of materials containing lignin nanoparticles (LNPs) for applications related to food packaging, agricultural films and furniture coatings. To this end, numerous methods have been developed for the preparation of LNPs that can be broadly divided into chemical and physical.

Chemical methods for the conversion of raw lignin to LNPs are the most common and include solvent shifting, self-assembly, acid-catalyzed precipitation, and polymerization (Low, L. E. et al. Environ. Nanotechnol. Monit. Manag. 2021, 15, 100398.) However, chemical methods present some limitations for upscaling due to the significant cost and environmental impact of chemicals and/or solvents used. Clearly, any practical application of LNPs requires bigger production volumes as well as more environmentally benign synthetic protocols.

Physical methods such as ultrasonication, homogenization and ball-milling are more environmentally benign but less developed. Ultrasonication (U/S) in particular, is a safe-by design physical method to produce LNPs from raw lignin. The known processes that involve the use of U/S in the production of LNPs can be divided in two main categories:
A. Processes based on solvent-shifting in which lignin is dissolved in an organic solvent and then water is slowly added as the non-solvent to precipitate the hydrophobic lignin particles. Alternatively, the solvent/non-solvent combination can be replaced by a pH swing where lignin is dissolved in a highly alkaline water solution (pH>10) which is then slowly acidified. These processes employ U/S as an auxiliary means to prevent particle aggregation. Their main drawback is the use of organic solvents such as tetrahydrofuran (THF), dimethylsulfoxide (DMSO), dimethylformamide (DMF) and ethanol (EtOH), or strong acids and bases to produce LNPs, thus they are not environmentally benign. In addition, these lab-scale methods reported the production of LNPs dispersions which were either very dilute, with a lignin concentration below 1% w/v (Jiang, Z. et al. J Hazard Mater 2021, 403, 123701), or had a very small total volume, less than 30 mL (IN 201911011852A), or both (Yin, H. et al. Colloids Surf. A 2018, 545, 51-59).
B. Processes which take place in aqueous media and U/S is the sole means to produce LNPs. Specifically, Garcia González et al. (Garcia Gonzalez, M. N. et al. J. Appl. Polym. Sci, 2017, 134(38), 45318) obtained stable aqueous colloidal dispersions of LNPs with a particle size between 10 - 50 nm via the U/S of softwood Kraft lignin in water (0.1% w/v, V = 10 mL) for 6 hours. Gilca et al. (Gilca, I. A. et al. Ultrason. Sonochem. 2015, 23, 369-375) prepared LNPs from two types of commercial non-wood lignin (wheat straw and Sarkanda grass) by U/S of aqueous lignin suspensions (0.7% w/v) for 60 min followed by drying under mild conditions. Lignin particle size was reduced to 10 - 50 nm as assessed by dynamic light scattering (DLS), however the shape of the particles was irregular. Specifics about the drying procedure or the volume of the process were not provided. Recently, Chen et al. (Chen, Y. et al. Int. J. Biol. Macromol. 2019, 128, 414-420) prepared a dense dispersion of LNPs in deionized water (16% w/v, V = 10 mL) using alkali lignin (CAS# = 8068-05-1) and applying high intensity (25 kHz and 800W) U/S for 1 h. The as-made LNPs aqueous dispersion had a particle size of approximately 200 nm (polydispersity index, PDI = 0.25), measured by DLS. Transmission Electron Microscopy (TEM) images after drying a sample of the LNPs dispersion on a carbon support film suggested an irregular shape of the LNPs.

The above prior art relates to the lab scale production of LNPs using small volumes of water dispersions (≤ 10 mL), when reported. Up to date, there have been no reports of the successful production of LNPs at a larger scale. Therefore, the need remains for an efficient and reproducible method of producing LNPs that can be applied to a larger, industrially relevant scale that is at the same time benign for the environment.

### SUMMARY OF THE INVENTION

The invention described herein addresses the need for the physical treatment of raw lignin to produce isolated and dry batches of LNPs of controlled size depending on the requirements of the end application. The LNPs are produced via a safe, reproducible and sustainable by design method that does not involve the use of organic solvents and hazardous or aggressive chemicals.

Thus, one aspect of this invention pertains to a method for manufacturing a colloidal dispersion of lignin nanoparticles said method comprising the following steps in this order:
a) providing lignin;
b) adding said lignin into an aqueous dispersion medium, wherein the aqueous dispersion medium does not comprise organic solvents, acids or bases; and
c) subjecting the said mixture to an ultrasonication treatment for a sufficient period of time, during which the temperature is kept constant at a set value, to obtain a dispersion of lignin nanoparticles with a hydrodynamic diameter below 1 µm, as measured by Dynamic Light Scattering; wherein said constant temperature value is at least 20 °C. Said method is a facile and environmentally benign method for the synthesis of LNPs via ultrasonication treatment.

A second aspect of this invention pertains to a method for the upscaling of LNPs production using a customized ultrasound-assisted pilot line.

The present invention provides a versatile, reproducible and environmentally benign method to produce LNPs using only water as the dispersing medium and not any chemical reagents or organic solvents. In addition, the precise control of the reaction temperature as disclosed herein leads to the production of LNPs with a particle size below 700 nm in lab-scale (≤ 0.5 L) as well as pilot-scale (30 L). Therefore, the disclosed method enables the transition to the industrial production of LNPs which can be used in a variety of industrial applications, such as reinforcing fillers with additional anti-bacterial, water barrier or UV-blocking properties for films and coatings in food packaging, agriculture or outdoor furniture.

Other aspects and further scope of applicability of the present invention will become apparent from the detailed description to follow.

### BRIEF DESCRIPTION OF THE DRAWINGS

The present invention will now be described with reference to certain embodiments thereof, which are illustrated in the accompanying drawings. It should be noted that the accompanying drawings illustrate preferred embodiments of the invention, therefore should not be considered as limiting the scope of the invention.
Fig. 1 shows the (p-hydroxypropenyl) phenolic monomers of lignin.
Fig. 2 shows the HDD, measured by DLS at 1 h intervals, during the 4 h U/S treatment of a Kraft lignin dispersion in water (0.1% w/v, 0.1g/100mL) using an ice bath for controlling the temperature.
Fig. 3 shows the HDD, measured by DLS at 1 h intervals, during the 4 h U/S treatment of a Kraft lignin dispersion in water (0.1% w/v, 0.1g/100mL) at 7, 20, 45 and 60 °C using a double-walled beaker for controlling the temperature.
Fig. 4 shows the HDD, measured by DLS at 1 h intervals, during the 4 h U/S treatment of a Kraft lignin dispersion in water (0.1% w/v, 0.5g/500mL) using an ice-bath for controlling the temperature.
Fig. 5 shows the HDD, measured by DLS at 1 h intervals, during the 4 h U/S treatment of a Kraft lignin dispersion in water (1% w/v, 5g/500mL) at 7 °C (A), 20 °C (B), 45 °C (C) and 60 °C (D) using a double-walled beaker for controlling the temperature.
Fig. 6 (A) and (B) show the TEM images of solid-state LNPs obtained after the 4h U/S treatment of a Kraft lignin dispersion (1% w/v) in water at 45 °C, followed by freeze-drying of the aqueous dispersion.
Fig. 7 shows a TEM image of raw Kraft lignin.
Fig. 8 shows the HDD, measured by DLS at 1 h intervals, during the 4 h U/S treatment at 45 °C of a Kraft lignin dispersion in water with a lignin concentration of 1, 2, 3 and 4% w/v.
Fig. 9 shows (A) the particle size distribution curve of the LNPs dispersion in water (1% w/v) after 4 h U/S treatment at 45° C, (B) the particle size distribution curve of the LNPs obtained after centrifugation and drying in the oven of the above dispersion, (C) the particle size distribution curve of the LNPs obtained after filtration and drying in the oven of the above dispersion, (D) the particle size distribution curve of LNPs after freeze-drying of the above dispersion. Particle size distribution curves were measured by DLS.
Fig. 10 shows the flow diagram of the ultrasound-assisted pilot line.
Fig. 11 shows the HDD, measured by DLS at 1 h intervals, during the 4 h treatment in the ultra-sound assisted pilot line of different types of lignin (kraft or soda) dispersed in water at different concentrations and temperatures: (A) Kraft lignin, 45° C, 1.0% w/v, V=30 L, (B) Kraft lignin, 35° C, 1.0% w/v, V=30 L, (C) Kraft lignin, 45° C, 0.5% w/v, V=30 L, and (D) Soda lignin, 45° C, 1.0% w/v, V=30 L.
Fig. 12 shows the particle size distribution curve, as measured by DLS, of the solid-state LNPs produced by the ultrasound-assisted pilot line after 4h of U/S of a lignin dispersion (1% w/v) in water at 45 °C, followed by freeze-drying for (A) Kraft and (B) soda lignin.
Fig. 13 (A) and (B) shows the TEM images of the solid-state LNPs produced by the ultrasound-assisted pilot line after 4 h of U/S treatment, followed by freeze drying of a Kraft lignin dispersion (1% w/v) in water at 45 °C.

### DETAILED DESCRIPTION OF THE INVENTION

Unless defined otherwise, all technical and scientific terms used herein have the same meaning as commonly understood by those of ordinary skill in the art considering the present disclosure and context.

As used herein, the term "nanoparticle" refers to particles with a diameter smaller than 1 µm, as measured by TEM in the solid state or as measured by DLS in a liquid medium dispersion.

As used herein, the term "lignin nanoparticles (LNPs)" refers to either solid-state lignin nanoparticles or lignin nanoparticles dispersed in a liquid medium with a diameter smaller than 1 µm, as measured by TEM in the solid-state or DLS in the liquid dispersion.

As used herein, the terms "colloidal dispersion" or "dispersion" are used interchangeably to refer to a mixture in which insoluble solid-state nanoparticles are homogeneously dispersed in a liquid medium.

As used herein, the terms "stable colloidal dispersion" and "stable nanoparticle dispersion" refer to a dispersion of nanoparticles inside a liquid medium in which the nanoparticle size does not change over time.

As used herein, the term "organic solvent" refers to any carbon-based liquid medium that is used to dissolve or disperse chemical compounds.

As used herein, the term "semi-flow process" refers to a partially or intermittently flowing system or process.

As used herein, the term "ultrasonication energy" refers to the amount of energy applied to a raw lignin mixture in a liquid medium to produce LNPs. Ultrasonication energy is measured in Joules (J = W*s) by multiplying the ultrasonication power amplitude (W) with the applied ultrasonication time (s) and duty cycle. Ultrasonication energy may also be normalized per unit volume (J^{∗}L⁻¹) and per hour of treatment (J^{∗}L^{-1∗}h⁻¹).

Temperature is one of the key parameters that can affect the outcome of the U/S treatment to produce LNPs. Previous studies used ice baths to control the temperature and avoid excessive heating of the aqueous dispersion during the exothermic U/S treatment process. Moreover, the actual temperature of the dispersion was not recorded. Therefore, the effect of temperature on the particle size of lignin has not previously been evaluated.

As shown herein, the inventors have unexpectedly observed that going beyond the prior art and varying the temperature in a controlled fashion during the U/S process had a major impact on lignin particle size. Specifically, the lignin particle size was smaller and the LNPs production rate was faster when the temperature was precisely controlled. In addition, when the inventors tried to upscale the prior art methodology to produce larger batches of LNPs, they could not obtain a homogeneous LNPs aqueous dispersion with a lignin particle size below 1 µm. By contrast, LNPs with a particle size below 1 µm and a narrow size distribution of ± 20% or less were consistently produced when the prior-art experimental set-up was abandoned, and the temperature was raised and kept constant at 20 °C or higher.

Example 1 demonstrates the effect of precise temperature control on LNPs particle size for small volumes and dilute dispersions of lignin in water (< 1% w/v lignin, V ≤ 100 mL). As detailed in Example 1, the inventors initially conducted experiments based on the prior art U/S methodology to produce LNPs, i.e. using an ice bath for controlling the temperature (Garcia González et al., Gilca et al.). The temperature of the dispersion was constantly monitored and was 20 ± 4 °C. The lignin particle size was gradually reduced from 2100 ± 800 nm before U/S to 554 ± 185 nm after 4 h of U/S treatment, as measured by DLS.

By contrast, when the U/S treatment was applied under constant temperature for a range of temperature values between 7 and 60 °C, LNPs of a comparable or smaller size were produced after just 1 h of U/S treatment for all temperatures tested. When U/S treatment was continued for a total of 4 h, homogeneous LNP populations with a smaller particle size and a narrower size distribution compared to prior art were produced. Specifically, when the temperature was kept constant at 20 ± 1 °C, using a double-walled beaker, the LNPs particle size was 269 ± 24 nm after 4 h of U/S treatment, compared to 554 ± 185 nm with the prior art conditions.

As shown in Example 2, when the volume of the dispersion was increased 5-fold, from 100 mL to 500 mL, while maintaining the same lignin concentration (<1% w/v lignin) the prior art methodology afforded a heterogeneous dispersion of lignin particles with a size greater than 1 µm. By contrast, when the methodology described herein was employed for the same dispersion volume (albeit at a 10-fold higher lignin concentration), and the temperature was accurately controlled at a set value of 20 °C or higher, LNPs of a hydrodynamic diameter below 1 µm were obtained.

In certain embodiments, said temperature value is chosen within the range from about 20 °C to about 75 °C, preferably from 20 °C to 65 °C. In other embodiments, said value is chosen within the range from 35 °C to 75 °C. In yet other embodiments, said value is chosen within the range from above 25 °C to 65 °C. In a preferred embodiment, said value is chosen within the range from 30 °C to 65 °C. The chosen value is kept constant throughout the ultrasonication treatment using external cooling circulators, or any other suitable means available in the art. Preferably, the temperature is kept constant at the chosen value plus or minus 5 °C, plus or minus 4 °C, plus or minus 3 °C, plus or minus 2 °C, plus or minus 1 °C, plus or minus 0.5 °C. Most preferably, the temperature is kept constant at the chosen value plus or minus 1 °C.

Thus, according to a first aspect, a method is provided for manufacturing a colloidal dispersion of lignin nanoparticles said method comprising the following steps in the order mentioned:
a) providing lignin;
b) adding said lignin into an aqueous dispersion medium, wherein the aqueous dispersion medium does not comprise organic solvents, acids or bases;
c) subjecting the said mixture to an ultrasonication treatment for a sufficient period of time, during which the temperature is kept constant at a set value to obtain a dispersion of lignin nanoparticles with a hydrodynamic diameter below 1 µm, as measured by DLS,
wherein said constant temperature value is at least 20 °C.

The source of lignin that may be used in said method is commercially available alkali, kraft and soda lignin. Kraft lignin extraction from wood pulp is widely used in the paper industry. Soda lignin extraction is used for the separation of lignin from lignocellulosic biomass obtained from agricultural residues (straw, bagasse, etc) or wood chips. Other types of lignin, produced via different non-industrial extraction processes, such as organosolv, ionic liquid, and enzymatic extraction may also be employed to obtain lignin suitable for the methods disclosed herein. The lignin used for the U/S treatment may have been obtained by grinding of raw lignin in a semi-industrial grinder to break down the large aggregates (> 50 µm).

One of the advantages of this method is that it uses an aqueous liquid dispersion medium and it does not include organic solvents such as THF, EtOH, DMF or DMSO, organic compounds such as surfactants, stabilizers or acids and bases such as HCl, NaOH or KOH. Thus, the method does not employ chemicals that are considered as potential human health or environmental hazards. This consideration is important, especially for methods that may be adapted for large-scale production. In one preferred embodiment, the aqueous dispersion medium consists of water.

The method of the present invention yields lignin nanoparticle dispersions with a hydrodynamic diameter below 1 µm, as measured by DLS. Preferably, the ultrasonication treatment of lignin is performed using ultrasound processors equipped with a sonotrode whose diameter may vary between 2 and 40 mm or a titanium alloy cascatrode, depending on the volume and the concentration of the lignin dispersion. The ultrasonication energy provided to the system per hour and per unit volume may also vary between 100 and 4000 kJ h⁻¹ L^{-1,} depending on the volume and the concentration of the lignin dispersion.

The U/S treatment time required for obtaining a dispersion of LNPs with a hydrodynamic diameter below 1 µm can be assessed with routine experimentation using DLS. For instance, said duration of the U/S treatment may be 6 h, 5h, 4 h, 3h, 2h or 1h.

It was also surprisingly observed that increasing the temperature of the dispersion during the U/S treatment led to LNPs with a smaller and more uniform particle size at a shorter time. Specifically, after one hour of U/S treatment, LNPs with a particle diameter of 530 ± 51 nm, 450 ± 34 nm, 375 ± 9 nm and 330 ± 8 nm, were produced at 7, 20, 45 and 60 °C respectively compared to 913 ± 315 nm with the prior art conditions (Example 1).

The effect on the particle size of LNPs produced by carrying out the U/S treatment at a higher but constant temperature was even more pronounced when the production was upscaled. Indeed, as shown in Example 2, when the volume of the dispersion was increased 5-fold from 100 ml to 500 mL, while maintaining the same lignin concentration (<1% w/v lignin), the prior art methodology resulted in a heterogeneous dispersion of particles with a size greater than 1 µm. By contrast, when the methodology described herein was employed for the same dispersion volume of 500 mL, and the temperature was accurately controlled and increased above 20 °C, higher (but constant) temperature values of 45° and 60 °C afforded monodisperse LNPs with a HDD below 700 nm, as measured by DLS, even for a 10-fold higher lignin concentration. Comparable results were obtained when the constant temperature was set at 35 °C (Example 5). Thus, in a preferred embodiment, during the ultrasonication treatment of step (c) the temperature is kept constant at a set value chosen within the range from 30 °C to 65 °C, most preferably from 35 °C to 60 °C, even more preferably at 45° C.

The accurate control of the temperature as presented herein can be exploited to tune the final particle size of the LNPs. For instance, the LNPs produced by the disclosed methodology have a hydrodynamic diameter of 800 nm, 700 nm, 600 nm, 500 nm, 400 nm, 300 nm, 200 nm or 100 nm, as measured by DLS. In a preferred embodiment, the hydrodynamic diameter of the nanoparticles dispersion in the dispersion medium is below 700 nm, as measured by DLS. The duration of the U/S treatment sufficient for obtaining a dispersion of lignin nanoparticles with the desired hydrodynamic diameter may be 6 h, 5h, 4 h, 3h, 2h or 1h. The U/S time needed to achieve the desired particle size may be easily monitored by collecting samples at set time intervals and measuring the hydrodynamic diameter of the LNPs by DLS.

In another preferred embodiment, the hydrodynamic diameter of the nanoparticle dispersion in the dispersion medium is below 600 nm, as measured by DLS. In yet another preferred embodiment, the hydrodynamic diameter of the nanoparticle dispersion is below 500 nm, as measured by DLS.

The U/S energy provided to the system per unit volume per hour lies within the range of 100 of 4000 kJ L⁻¹ h⁻¹, preferably between 160 and 720 kJ L⁻¹ h⁻¹, depending on the temperature, the volume and the concentration of the dispersion. The skilled person would have no difficulty determining the optimal U/S energy as part of routine experimentation.

The present invention is the first disclosure of aqueous dispersions of LNPs produced at volumes greater than 100 mL. The overall volume is an important parameter which allows for increasing the production volume and reducing production costs. According to a preferred embodiment, the dispersion volume of the LNPs is at least 100 mL. In another preferred embodiment, the dispersion volume is at least 500 mL. In yet another preferred embodiment, the dispersion volume is at least 1 L. In a more preferred embodiments, the dispersion volume is at least 10 L.

Another important consideration in achieving large-scale production of LNPs is the concentration of lignin in the dispersion. As shown in Example 3, for all concentrations tested, varying from 1% w/v to 4% w/v, a 4 h U/S treatment of a raw lignin dispersion in water resulted in monodisperse LNPs with a hydrodynamic diameter as low as 535 ± 84 nm, as measured by DLS. Thus, according to an embodiment, the concentration of lignin in the dispersion can be greater than 0.1% w/v. According to another embodiment, the concentration of lignin in the dispersion can be equal to or greater than 1% w/v, such as 2% w/v, 3% w/v, 4% w/v, 5% w/v, 6% w/v, 7% w/v, 8% w/v, 9°/ w/v or 10% w/v or higher. According to yet another embodiment, the concentration of lignin in the dispersion can vary within the range from 0.1% to 10% w/v, preferably within the range from 1% to 10% w/v.

As explained in the Background section, current examples of U/S treatment of lignin in water were carried out either at very low concentrations or at very small dispersion volumes. The methodology revealed herein produces monodisperse aqueous dispersions of LNPs with an HDD < 700 nm for lignin concentration of at least up to 10 % w/v and working volumes ranging from 100 mL to at least 30 L. This has not previously been demonstrated for the U/S assisted production of LNPs in water in the absence of any organic solvents or other chemical reagents (e.g. acids, surfactants, etc). Additionally, the method of the present disclosure allows for obtaining lignin nanoparticles with homogeneous morphology and particle size distribution, as assessed by using TEM analysis of the solid-state LNPs.

The inventors have observed that solid-state LNPs could only be produced via water sublimation (freeze-drying) and not via water evaporation. Example 4 compares three different procedures for obtaining solid-state LNPs from the respective aqueous dispersion: a) centrifugation and drying at 80°C, b) membrane filtration and drying at 80°C and c) freeze-drying. The study shows that procedures a) and b) resulted in significant agglomeration of LNPs after drying, with the particle size lying in the micron scale. By contrast, only a slight broadening of the particle size distribution curve of the powder obtained after freeze-drying of the aqueous dispersion was observed. Therefore, the combination of the ultrasonication conditions disclosed herein with freeze-drying yields gram-batches of solid-state LNPs with a hydrodynamic diameter below 700 nm, as measured by DLS after dispersing the particles in water, and a particle size diameter ranging between 50 and 200 nm as measured by TEM in the solid-state. Thus, according to an embodiment, the method of the present invention further comprises after step (c) a step (d) wherein the dispersion is freeze-dried under a controlled fashion to obtain solid-state LNPs with a particle size below 500 nm, as measured by TEM, preferably with a particle size equal or less than 200 nm, as measured by TEM.

According to this invention, any freeze drier may be used depending on the volume of the dispersion. For instance, a semi-industrial freeze-drier, capable of handling larger sample volumes compared to a lab-scale one, may be used for volumes between 5 and 40 L. The semi-industrial freeze-dryer may have a condenser capacity between 0.2 and 1.7 Kg h⁻¹, preferably a condenser capacity of 0.4 Kg h⁻¹. The temperature of the shelves where the frozen samples are placed, and the vacuum level in the chamber are critical parameters which can be adjusted during the sublimation process to control the process rate. The shelves temperature may vary from -10 to 35 °C and the vacuum level may vary from 0.2 to 1.0 mbar.

The inventors also designed and manufactured an ultrasound-assisted pilot line for the production of LNPs, as described in Example 5. The presented herein pilot line can treat up to at least 30 L of lignin water dispersions for lignin loadings up to at least 10 % w/v. Thus, according to a preferred embodiment, the dispersion volume is greater than 10 L, such as 20 L or 30 L. In another preferred embodiment, the dispersion volume is 30 L or greater. In these embodiments, step (c) of the present method is preferably a semi-flow process in which the mixture flow rate and the temperature are kept constant to ensure a uniform particle size of the produced LNPs. Preferably, the U/S energy provided to the system is also accurately controlled. Semi-flow processes are more suited for industrial-scale production compared with batch mainly due to the smaller dispersion volume where U/S is applied, the higher throughput of the process and the more facile control of the process parameters.

Preferably, the U/S-assisted production of LNPs in solid-state powder form at pilot scale comprises the following steps:
1) Grinding of raw dry lignin in a semi-industrial grinder at room temperature to break down the large aggregates (> 10 µm).
2) Addition of lignin from step 1 in water under vigorous stirring in the main tank at the targeted concentration (0.5 - 10% w/v).
3) Recirculation of the lignin dispersion between the main tank and the flow cell.
4) Control of the dispersion temperature, monitored by the temperature sensors, using the two external cooling circulators.
4) Application of U/S for 1- 6 h in the flow cell with the aid of a cascatrode.
5) Collection of the ultra-sound treated dispersion and freezing at -45°C.
6) Freeze-drying of the dispersion for 18 - 24 h to sublime water and obtain solid-state LNPs.

This process may be employed for different types of commercially available lignin such as kraft, soda, alkali and organosolv.

The ultrasound-assisted pilot line preferably comprises a jacketed tank which is equipped with an overhead stirrer and is connected to an external flow cell. U/S is applied in the flow-cell via the integration of a cascatrode which is connected to an ultrasonication processor. The flow rate may vary between 30 and 300 L h⁻¹, depending on the volume, the temperature and the concentration of the lignin dispersion. The U/S treatment time may vary between 1 and 6 hours and the U/S energy provided to the system per unit volume per time may also vary between 80 and 550 kJ L⁻¹ h⁻¹, preferably between 160 and 490 kJ L⁻¹ h⁻¹ depending on the U/S power and duty cycle. The skilled person would have no difficulty determining the optimal U/S energy as part of routine experimentation.

The colloidal aqueous dispersions obtained with the methods disclosed herein, represent nanoparticle populations with homogeneous morphology and particle size distribution as detailed herein. In addition, it is well documented in the scientific literature that U/S treatment of lignins also has a significant effect on their physicochemical properties (see for instance Gilca, I. A. et al. Ultrason. Sonochem. 2015, 23, 369-375 reporting the decrease of the guaiacyl, p-hydroxy phenol and β-O-4 linkages among other changes), that is dependent on the intensity of the U/S treatment applied. Thus, the methods disclosed herein result in the modification of the properties of the raw lignin that is used as starting material. Therefore, the present invention also provides colloidal aqueous dispersions and solid-state lignin nanoparticles obtainable with the methods disclosed herein.

### EXAMPLES

Hereinafter, the present invention is described in more detail with reference to examples and comparative examples. It will be apparent to one of ordinary skill in the art that these examples are for illustrative purposes only and should not be construed as limiting or altering the scope of the present invention.

### EXAMPLE 1

Effect of temperature on the production of LNPs dispersions in water at volumes <_ 100 mL.

Initially, experiments based on the prior art U/S methodology to produce LNPs using an ice bath for controlling the temperature (Garcia González et al., Gilca et al.) were run for the purpose of comparison. In a 250 mL glass beaker commercially available Kraft lignin (0.100 g) was added in 100 mL of reverse osmosis (RO) water to produce a mixture with a 0.1% w/v lignin concentration. The mixture was ultrasonicated for 4 h providing an U/S energy per unit volume per time of 3600 kJ L⁻¹ h⁻¹ via a 7 mm U/S probe (200W, 26 kHz). As reported, an ice bath was used to avoid excessive heating of the dispersion during the U/S treatment. The temperature of the dispersion was constantly monitored with a thermocouple and the ice bath was periodically replenished during the U/S treatment. Samples were collected every hour and the HDD of the dispersed lignin particles was measured by DLS using a Litesizer500 instrument by Anton Paar. Following DLS standard operating thresholds, the samples were diluted with water to obtain a final LNPs concentration between 100 - 200 ppm. The experiment was run three times and the HDD presented in this example is the mean of the three experiments. As shown in Fig. 2, the HDD of the lignin particles dispersed in water (0.1% w/v, V = 100 mL) gradually decreased from 2100 ± 803 nm before the U/S treatment τo 554 ± 185 nm after 4 h of ultrasonication. The temperature of the dispersion varied between 16 and 24 °C.

Once the prior art methodology was successfully reproduced, the effect of temperature on the LNPs particle size was evaluated. To this end, double-walled (jacketed) beakers connected to an external circulator were used instead of standard beakers to accurately control the temperature within ± 1 °C. A lignin dispersion (0.1% w/v, V = 100 mL) was prepared as above in a 250 mL jacketed beaker. The lignin dispersion was ultrasonicated for 4 h providing the same U/S energy as above. Experiments were run at four different temperatures of 7, 20, 45 and 60 °C. The temperature of the dispersion was constantly monitored and kept constant by adjusting the temperature of the liquid flowing within the walls of the jacketed beakers via an external cooling circulator. Samples were collected every hour and the HDD of the dispersed LNPs was measured by DLS, as described above.

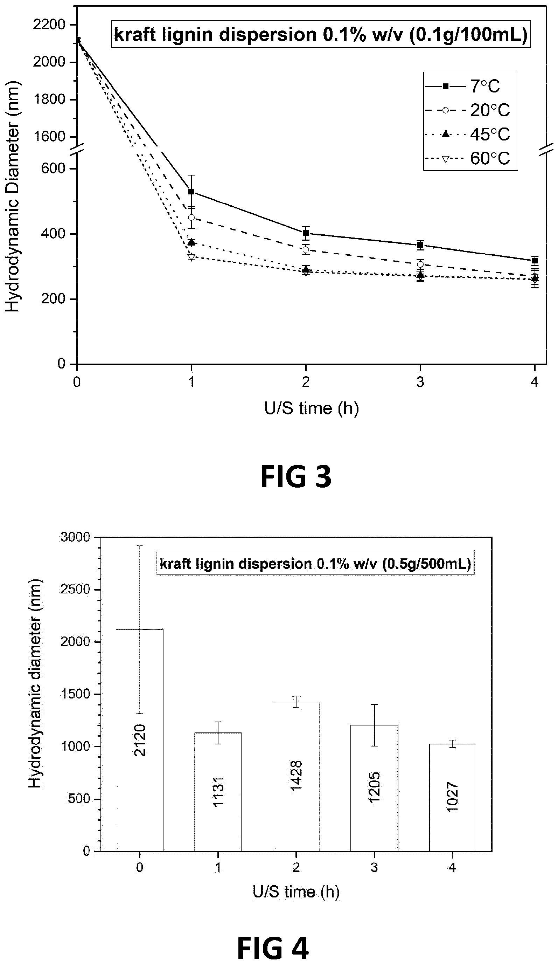

As shown in Fig 3 and tabulated in Table 1, the HDD rapidly decreased below 600 nm after just 1 h of U/S, regardless of the selected temperature. However, the HDD reduction rate increased with increasing temperature and the HDD of the LNPs at the end of the U/S treatment decreased with increasing temperature. As a result, the HDD of the LNPs was 317 ± 14, 269 ± 24, 262 ± 26 and 260 ± 16 nm after 4 h of U/S treatment at 7, 20, 45 and 60 °C, respectively.

**Table 1. Hydrodynamic diameters (HDD) of LNPs dispersed in water (0.1% w/v, V = 100 mL) after 4 h of U/S at 7, 20, 45 or 60 °C.**

| **Temp (°C)** | **Hydrodynamic diameter (nm)** | | | |
|---|---|---|---|---|
| **Time (h)** | **7 °C** | **20 °C** | **45 °C** | **60 °C** |
| 0 | 2120 ± 803 | | | |
| 1 | 530 ± 51 | 450 ± 34 | 375 ± 9 | 330 ± 8 |
| 2 | 402 ± 21 | 352 ± 15 | 289 ± 14 | 283 ± 7 |
| 3 | 363 ± 14 | 306 ± 16 | 272 ± 19 | 270 ± 14 |
| 4 | 317 ± 14 | 269 ± 24 | 262 ± 26 | 260 ± 16 |

Therefore, increasing the temperature above room temperature enhances the production rate and results in aqueous dispersions of LNPs with a smaller hydrodynamic diameter. Moreover, the accurate control of the temperature as presented herein can be exploited to tune the final particle size of the LNPs. Importantly, cooling of the dispersion at 20 °C, the average temperature measured when an ice-bath was used to reproduce the prior art methodology, is not necessary for reducing the LNPs particle size. In fact, higher temperatures furnished dispersions with a smaller LNPs diameter at a shorter U/S time. The positive impact of temperature on the production of LNPs dispersions in water has not been previously demonstrated.

### EXAMPLE 2

### Production of LNPs dispersions in water at larger volumes with accurate temperature control.

To upscale the production of LNPs, the volume of the aqueous dispersion was increased to 500 mL. Initially, the prior art experimental set-up was investigated, using an ice-bath for controlling the temperature and retaining the lignin concentration at 0.1% w/v. Specifically, in a 1 L glass beaker, Kraft lignin (0.500 g) was added in 500 mL of RO water. The beaker was placed in an ice-bath and the mixture was ultrasonicated for 4 h providing an U/S energy per unit volume per time of 720 kJ L⁻¹ h⁻¹ via a 14 mm U/S probe (200W, 26 kHz), capable of handling volumes up to 1 L. The temperature of the dispersion was constantly measured and found to fluctuate between 16 and 24 °C. Samples were collected every hour and the HDD of the dispersed LNPs was measured by DLS, as described in example 1. As shown in Fig. 4, the prior art experimental conditions afforded dispersions with a particle size above 1 µm (HDD = 1027 ± 36 nm).

To accurately control the temperature and exploit its positive impact on the production of homogeneous dispersions of LNPs in water, the experiments were run using jacketed beakers. Moreover, the lignin concentration was increased to 1 % w/v. This corresponded to a 10-fold denser suspension and 5-fold larger volume compared to prior art (see example 1). Specifically, in a 1 L jacketed beaker, Kraft lignin (5.00 g) was added in 500 mL of RO water and ultrasonicated for 4 h providing an U/S energy per unit volume per time of 720 kJ L⁻¹ h⁻¹ via a 14 mm U/S probe (200W, 26 kHz). Experiments were run at four different temperatures of 7, 20, 45 and 60 °C. The temperature of the dispersion was constantly monitored and kept constant by adjusting the temperature of the liquid flowing within the walls of the jacketed beakers via an external cooling circulator. Samples were collected every hour and measured by DLS as described in Example 1. For each temperature, the experiments were performed 3 times and the HDD presented is the mean of the 3 experiments.

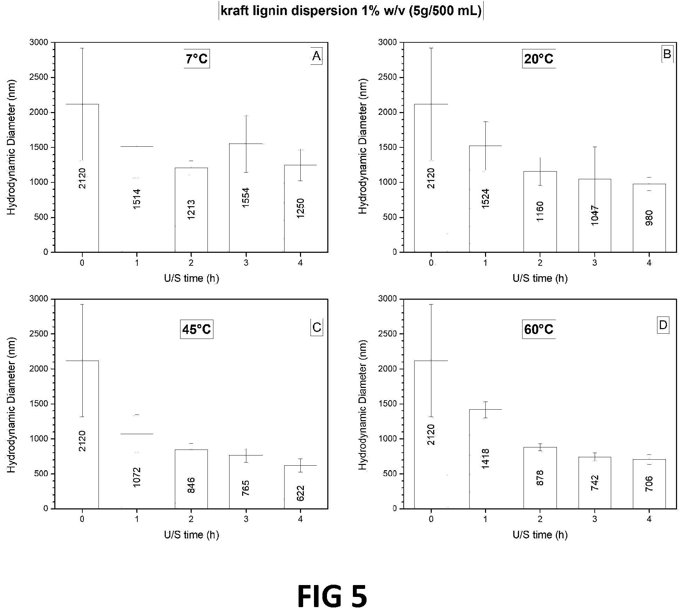

As shown in Fig. 5, for the experiments run at the lowest temperature of 7 °C (Fig. 5A), the HDD of the lignin dispersion after 4 h of U/S treatment was still greater than 1 µm (HDD = 1250 ± 228 nm). Moreover, the HDD measured over three experiments did not constantly decrease over time and had a high standard deviation, shown as error bars in Fig. 5. This in turn suggested heterogeneous LNPs populations with a broad size distribution and poor reproducibility. For the experiments run at 20 °C (Fig. 5B), the HDD of the lignin dispersion after 4 h of U/S treatment was slightly below the micron scale (HDD = 980 ± 96 nm).

By contrast, for the experiments ran at a higher temperature of 45 or 60 °C, the HDD of the lignin dispersion after 4 h of U/S treatment was well below the micron scale, at approximately 700 nm or lower, and with a low standard deviation. This in turn revealed that a uniform population of LNPs was obtained, without any signs of particles agglomeration. Specifically, the HDD was gradually reduced over time to a mean value of 622 ± 95 nm at 45 °C (Fig. 5C) and 706 ± 69 nm at 60 °C (Fig. 4D) after 4 h of U/S treatment. Therefore, an elevated temperature of 45 °C was critical to obtain a water dispersion of LNPs with a HDD below 700 nm after 4 h of U/S treatment for 1 % w/v lignin concentration and a dispersion volume of 500 mL. This had not been previously demonstrated.

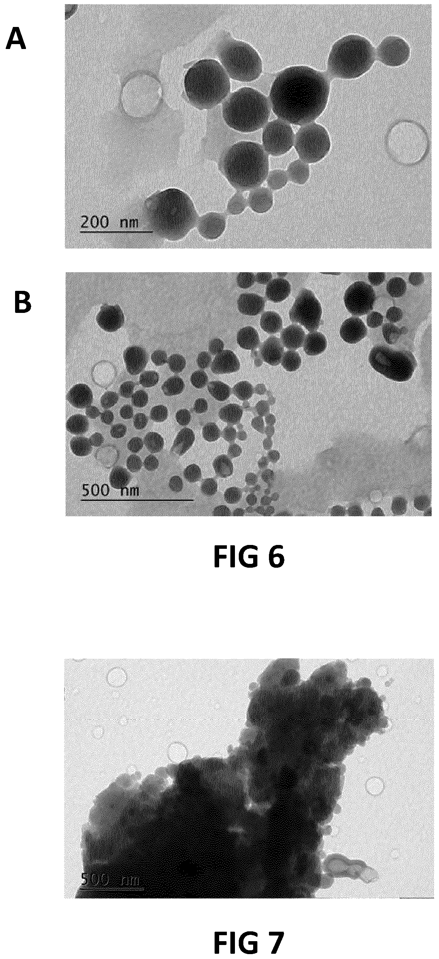

For the experiment run at the optimal temperature of 45°C, the aqueous dispersion was freeze-dried and the obtained solid-state LNPs were analysed by TEM. TEM images, presented in Fig. 6, showed a relatively spherical shape of the LNPs with a particle size diameter ranging between 50 and 200 nm. TEM images of the raw lignin were also acquired (Fig. 7), revealing the presence of large agglomerates with dimensions larger than 2 µm.

### EXAMPLE 3

### Production of LNPs dispersions in water with higher lignin concentration (≥1 w/v).

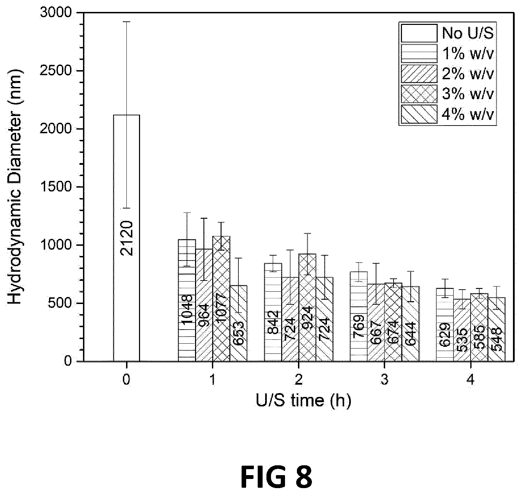

To increase the process yield, the effect of lignin concentration in the aqueous dispersion was investigated. Specifically, four different dispersions of lignin were prepared in 1 L jacketed beakers, by adding 5, 10, 15 or 20 g of raw lignin in 500 mL of RO water, to prepare aqueous dispersions of LNPs with a lignin concentration of 1, 2, 3, 4% w/v, respectively. The temperature of the dispersion was constantly monitored and kept constant at 45 °C, as described in Example 2. Each dispersion was ultrasonicated for 4 h providing an U/S energy per unit volume per time of 720 kJ L⁻¹ h⁻¹ via a 14 mm U/S probe (200W, 26 kHz). Samples were collected at hourly intervals and the HDD was measured by DLS, as described above. For each lignin concentration, the experiments were performed 3 times and the HDD presented is the mean of the 3 experiments. Table 2 and Fig. 8 show the HDD of each dispersion, along with the respective standard deviation. The HDD of the LNPs was gradually reduced from above 2100 nm before ultrasonication to below 629 ± 79 nm, regardless of the initial lignin concentration (1 - 4% w/v).

**Table 2. Hydrodynamic diameter (HDD) measured over time during the U/S treatment of four different lignin dispersions in water with a lignin concentration of 1, 2, 3 and 4% w/v (V = 500 mL).**

| **% Lignin** | **Hydrodynamic diameter (nm)** | | | |
|---|---|---|---|---|
| **Time (h)** | **1% w/v** | **2% w/v** | **3% w/v** | **4% w/v** |
| 0 | 2120 ± 803 | | | |
| 1 | 1048 ± 229 | 964 ± 267 | 1077 ± 121 | 653 ± 235 |
| 2 | 842 ± 73 | 724 ± 235 | 924 ± 178 | 724 ± 190 |
| 3 | 769 ± 81 | 667 ± 176 | 674 ± 39 | 644 ± 130 |
| 4 | 629 ± 79 | 535 ± 84 | 585 ± 44 | 548 ± 100 |

Therefore, the methodology revealed herein produced aqueous dispersions of LNPs with uniform size and a HDD below 700 nm for lignin concentration of at least 4% w/v and working volumes of at least 0.5 L. This is the first demonstration of an ultrasound assisted production of high-quality, monodisperse LNPs in water at these large volumes and high concentrations without any organic solvents or other chemicals used.

### EXAMPLE 4

### Production of solid-state LNPs (dry LNPs).

In this example, different separation and drying methods are compared to obtain solid-state LNPs in dry form. Kraft lignin (0.500 g, 1% w/v) was added in 500 mL of RO water and ultrasonicated for 4 h providing providing an U/S energy per unit volume per time of 720 kJ L ¹ h⁻¹ at the previously optimized temperature of 45 °C (see Example 2). After 4 h of U/S treatment, the dispersion was divided in three equal parts to evaluate three different methods for obtaining solid-state LNPs:
a) centrifugation of the dispersion, decanting of the supernatant and drying of the solid residue at 80 °C in an oven for 2 days,
b) filtration of the dispersion using a membrane filter with a 450 nm pore diameter and drying of the collected solid precipitate residue at 80 °C in an oven for 2 days,
c) freezing of the dispersion at -45 °C and freeze-drying in a semi-industrial freeze-dryer with a condenser capacity of 0.4 kg/h and a maximum ice condenser temperature of -50 °C.

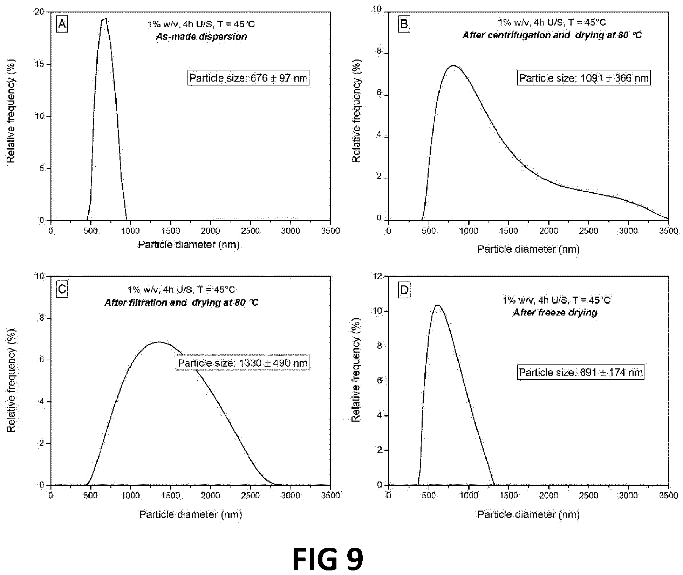

Fig. 9 shows the particle size distribution curves of the LNPs isolated via each method, as measured by DLS after redispersing the particles in water at concentration between 100 - 200 ppm. For the purpose of comparison, Fig. 9A shows the particle size distribution curve of the as-made lignin dispersion after 4h of U/S treatment at 45° C. The particle diameter was 676 ± 97 nm. Fig. 9B and 9C show the particle size distribution of the solid-state LNPs isolated by centrifugation or filtration, respectively, followed by drying under mild conditions (80 °C for 2 days). Both methods resulted in a significant agglomeration of lignin particles, with the particle size measured in the micron scale, i.e. 1091 ± 366 nm and 1330 ± 490 nm for the LNPs isolated via filtration or centrifugation, respectively, followed by oven drying.

By contrast, only a slight broadening of the particle size distribution curve was observed for the solid-state LNPs obtained after freeze-drying of the water dispersion, corresponding to a particle diameter of 691 ± 174 nm as measured by DLS, as shown in Fig. 9D. Moreover, as already discussed in Example 2, TEM images of the solid-state LNPs obtained after freeze-drying showed a relatively spherical shape with a particle size diameter varying between 50 and 200 nm (Fig. 6).

Therefore, the combination of the presented herein ultrasonication conditions with freeze-drying of a lignin dispersion produces gram-batches of solid-state LNPs in the absence of any chemical reagents or organic solvents, with a hydrodynamic diameter below 700 nm, as measured by DLS after dispersing the particles in water, and a particle size diameter ranging between 50 and 200 nm as measured by TEM in the solid-state.

### EXAMPLE 5

### Production of LNPs in an ultra-sound assisted pilot-line.

Another target of this invention is the upscaling of the lab-scale process by combining a novel ultrasound-assisted pilot-line and a semi-industrial freeze-dryer to obtain LNPs up to at least 1 kg per run. The successful scaling-up of LNPs production via ultrasonication is still a challenge due to the need of bespoke equipment and related maintenance costs, as well as limited process efficiency and reproducibility which depends on the type and the quality of the raw materials.

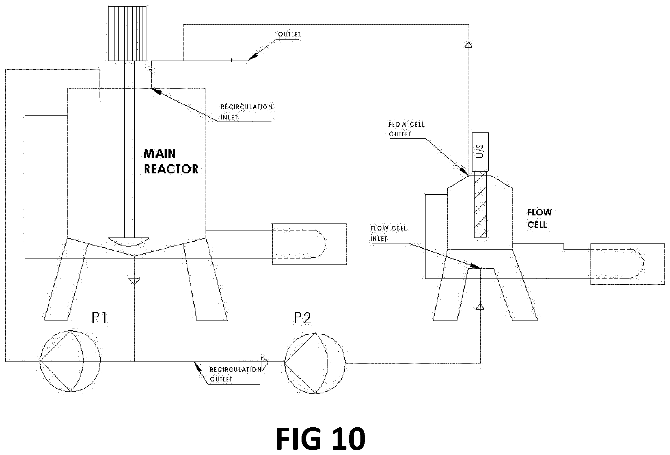

In this invention, an ultra-sound assisted pilot line to produce LNPs dispersions in water was designed and manufactured. Specifically, a continuous steam process was designed, and a customized ultra-sound assisted pilot line was manufactured. A flow diagram of the pilot is shown in Fig. 10. The pilot consists of a double-walled 30 L tank, equipped with a high-speed overhead stirrer. The main tank is connected via PVC tubing to an external flow cell with a working volume of 500 mL. The liquid dispersion is recirculated with the aid of pumps with a flow rate between 30 and 300 L h⁻¹. The U/S energy is generated by an U/S processor for industrial applications (1500W, 20kHz) and is applied to the system via a titanium alloy (Ti-6AI-4V) cascatrode that is integrated in the flow-cell.

The lignin aqueous dispersion is prepared in the main tank under mechanical agitation provided by the overhead stirrer and then is recirculated between the tank and the flow cell. The temperature of the dispersion is constantly monitored by two sensors located in the inlet and the outlet of the flow cell and controlled by appropriately adjusting the temperature of the fluid running inside the walls of the main tank and the flow cell by two separate external cooling circulators.

For the U/S-assisted production of LNPs in solid-state form at pilot scale, the following steps are required:
1) Grinding of raw dry lignin in a semi-industrial grinder at room temperature to break down the large aggregates (> 10 µm).
2) Addition of lignin from step 1 in water under vigorous stirring in the main tank at the targeted concentration (0.5 - 10% w/v).
3) Recirculation of the lignin dispersion between the main tank and the flow cell.
4) Control of the dispersion temperature, monitored by the temperature sensors, using the two external cooling circulators.
4) Application of U/S for 1 - 6 h in the flow cell with the aid of a cascatrode.
5) Collection of the ultra-sound treated dispersion and freezing at -45°C.
6) Freeze-drying of the dispersion for 18 - 24 h to sublime water and obtain solid-state LNPs.

This process was employed for different types of commercially available lignin such as kraft, soda, alkali and organosolv. In addition, pilot-scale runs were carried out varying the temperature of the dispersion between 35 and 60 °C and the lignin concentration between 0.5 and 10% w/v. All runs constantly produced solid state LNPs with a particle size < 700 nm after freeze-drying.

For example, 300 g of the ground Kraft lignin was added in 10 L of RO water. The resulting mixture was slowly added into the main tank, already containing 20 L of RO water, under vigorous stirring to obtain a final lignin concentration of 1% w/v in a total volume of 30 L. The lignin dispersion was ultra-sound treated in the pilot line for 4 h, applying an U/S energy of 162 kJ L⁻¹ h⁻¹ via the flow-cell integrated cascatrode. The temperature of the dispersion in the flow cell was constantly monitored and kept constant at 45 °C by adjusting the temperature of the liquid flowing within the walls of the jacketed flow cell via an external cooling circulator. Three samples were collected every hour and measured by DLS as described in Example 1.

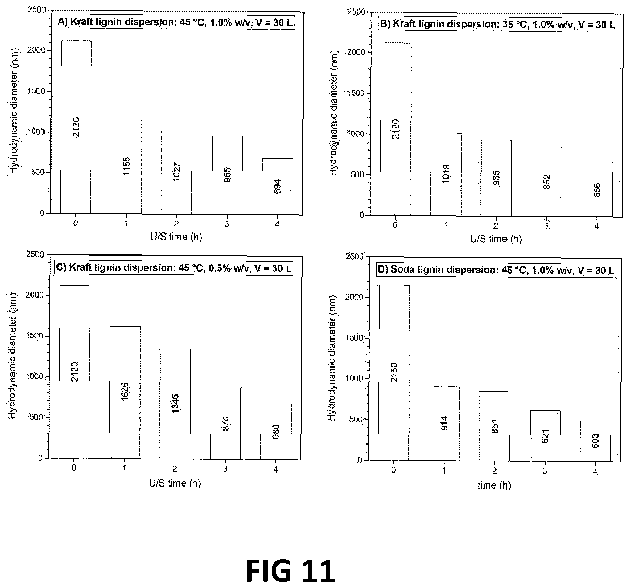

As shown in Fig. 11A, the HDD of the commercial kraft lignin dispersion was gradually reduced from above 2100 nm (t = 0) to 694 nm after 4 h of U/S treatment at 45 °C. Similar results, within experimental error were obtained when the temperature was lowered to 35 °C (Fig. 11B) or the lignin concentration was decreased to 0.5% w/v (Fig. 11C). The smallest HDD of 503 nm was obtained when commercially available soda lignin was treated in the pilot-line for 4 h at 45 °C at a concentration of 1% w/v (Fig. 11D). The smaller particle size obtained with soda lignin can be attributed to the fact that soda lignin is sulphur free, whereas kraft lignin contains sulphur groups which favour agglomeration. Finally, it should be noted that when the temperature of the dispersion was increased up to 60 °C, LNPs with a particle size below 700 nm were also produced, albeit at a significantly higher energy cost.

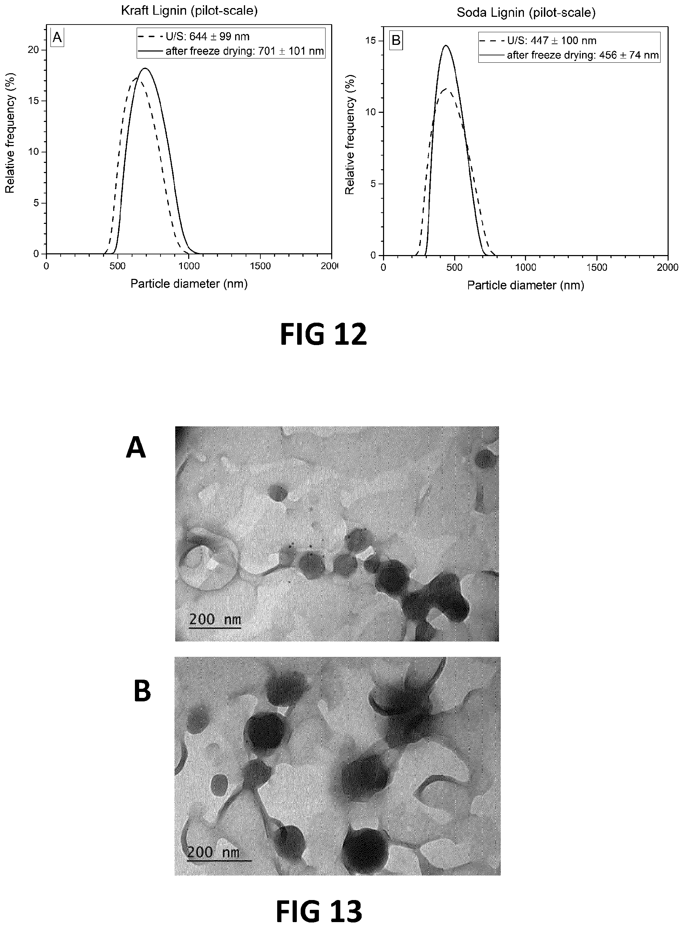

After the U/S treatment, each dispersion was collected and freeze-dried using a semi-industrial freeze-dryer, since this is the only method that did not lead to agglomeration of LNPs upon drying (see example 4). Fig. 12 shows the comparison between the particle size distribution of the kraft and soda LNPs produced in the ultrasound ultra-sound assisted pilot line before and after freeze-drying, as measured by DLS. The particle size of the LNPs dispersion after 4 h of U/S treatment in the pilot at 45 °C was 644 ± 99 nm for kraft (Fig. 12A) and 447 ± 100 nm for soda (Fig. 12B). Freeze-drying of the dispersions to obtain solid-state LNPs had a minor effect on particle size which slightly increased to 701 ± 101 nm for kraft and 456 ± 74 nm for soda lignin.

This was verified by collecting TEM images of the solid-state LNPs. As shown in Fig. 13, the particle size of the lignin nanoparticles was between 100 - 200 nm. It should be reminded that the difference in particle size measured by DLS and TEM is not unexpected, since TEM measures the diameter of the nanoparticles in the solid-state, whereas DLS measures the diameter of the nanoparticles when dispersed in a liquid medium where a thin electric dipole layer of the medium adheres to the particles' surface.

To conclude, the ultra-sound assisted pilot line presented herein was capable of producing solid-state LNPs using different types of lignin (kraft, soda, alkali, organosolv), by accurately controlling the temperature of the respective dispersions.

## Claims

1. Method for manufacturing a colloidal dispersion of lignin nanoparticles said method comprising the following steps in this order:
a) providing lignin;
b) adding said lignin into an aqueous dispersion medium, wherein the aqueous dispersion medium does not comprise organic solvents, acids or bases; and
c) subjecting the said mixture to an ultrasonication treatment for a sufficient period of time, during which the temperature is kept constant at a set value, to obtain a dispersion of lignin nanoparticles with a hydrodynamic diameter below 1 µm, as measured by Dynamic Light Scattering;
wherein said constant temperature value is at least 20 °C.

2. The method according to claim 1 wherein during the ultrasonication treatment of step (c) the temperature is kept constant at a set value chosen within the range from 30°C to 65 °C.

3. The method of claim 1 or 2, wherein said temperature is kept constant within ± 1 °C.

4. The method according to anyone of the previous claims, wherein said aqueous dissolution medium consists of water.

5. The method according to anyone of the previous claims, wherein the hydrodynamic diameter of the nanoparticles dispersion in the dispersion medium is below 700 nm, as measured by Dynamic Light Scattering.

6. The method according to anyone of the previous claims, wherein the dispersion volume is at least 100 mL.

7. The method according to anyone of the previous claims, wherein the concentration of lignin in the dispersion is at least 0.5% w/v.

8. The method according to anyone of the previous claims, wherein the dispersion volume is at least 10 L, and wherein step (c) of U/S treatment is a semi-flow process in which the mixture flow rate is kept constant.

9. The method according to claim 8, wherein said flow rate is kept constant at a set value chosen within the range from 30 to 300 L per hour.

10. The method according to claim 8 or 9, wherein said U/S energy provided to the system per unit volume per time is set at a value chosen within the range from 100 and 4000 kJ per liter per hour.

11. The method according to anyone of the previous claims, further comprising after step (c) a step (d) wherein the dispersion is freeze-dried to obtain solid-state LNPs with a particle size below 200 nm, as measured by Transmission Electron Microscopy.

12. The method according to claim 11, wherein the hydrodynamic diameter of the solid-state LNPs after re-dispersion in said dispersion medium is below 700 nm, as measured by Dynamic Light Scattering.

13. Colloidal aqueous dispersions obtainable with the method of anyone of claims 1 to 10.

14. Solid-state LNPs obtainable with the method of claim 11, having a particle size below 200 nm as measured by Transmission Electron Microscopy, or claim 12, having a hydrodynamic diameter below 700 nm as measured by Dynamic Light Scattering after re-dispersion in dispersion medium.
